**Europäisches Patentamt**

**European Patent Office**

**Office européen des brevets**

(11) Publication number: **0 142 546**
**B1**

# (12) EUROPEAN PATENT SPECIFICATION

(45) Date of publication of patent specification: **02.12.87**

(21) Application number: **84902101.9**

(22) Date of filing: **04.05.84**

(86) International application number:
**PCT/SE84/00168**

(87) International publication number:
**WO 84/04285 08.11.84 Gazette 84/26**

(51) Int. Cl.⁴: **B 62 J 5/12**

(54) CONTROL APPARATUS FOR A DYNAMO CONNECTED TO A HUB.

(30) Priority: **04.05.83 SE 8302545**

(43) Date of publication of application:
**29.05.85 Bulletin 85/22**

(45) Publication of the grant of the patent:
**02.12.87 Bulletin 87/49**

(84) Designated Contracting States:
**AT BE CH DE FR GB LI LU NL SE**

(56) References cited:
**None**

(73) Proprietor: **INGVAR NILSSON MEKANISKA AB
Box 116
S-435 01 Mölnlycke (SE)**

(72) Inventor: **KÄLLSTRÖM, Olof
Syrenvägen 7
S-435 00 Mölnlycke (SE)**

(74) Representative: **Roth, Ernst Adolf Michael et al
GÖTEBORGS PATENTBYRA AB Box 5005
S-402 21 Göteborg (SE)**

Courier Press, Leamington Spa, England.

## Description

### Background of the Invention

The present invention refers to a control apparatus for a dynamo connected to a hub, particularly a wheel hub and which dynamo is of the type incorporating stator and armature, rotating with the hub and being arranged radially relative to each other, a locking device arranged for being movable to a position in which it prevents one of stator and armature from being rotated, a current collector fixed to one of said stator and armature and arranged to lead off current generated during arresting of stator or armature, a connecting wire having one end fixed within easy reach of the rider and the other end being attached to said locking device, which is movable during actuation of said connecting wire to current transmitting and rotation locking engagement with said current collector.

Such a hub connected dynamo is suitable for supplying current for the lighting of a bicycle, even if its use is not limited thereto.

Dynamos used for the generation of current for bicycle lighting have been on the market in a plurality of different embodiments and they entail advantages such as reliability, high efficiency, minimal influence from weather conditions and the state of the roads, no tyre wear and that it is easier to prevent their theft than most conventional arrangements.

In the Finnish patent specification 40443 is thus described such a bicycle dynamo incorporating an annular stator body with a stator winding, which is connected to the hub of the bicycle wheel and always participates in the rotation of the bicycle wheel, and a rotatably supported rotor, arranged inside the stator body and arranged to be arrestable against rotation by means of a control latch, which extends through a covering plate and can be brought to take up a current generating position in which the rotor is thus prevented from rotation and which is free to rotate in the second current free position. Current collectors are arranged in the covering lid. The device may be equipped with an actuating wire having one end fixed within easy reach of the rider and the other end being attached to said control latch.

The problem of this design is the difficulty in operating the dynamo and particularly to disconnect it during a ride, which means that the dynamo can cause accidents if the bicycle lighting shall be switched on or switched off as it may thereby be necessary to kick against the control latch projecting from the hub. In case the control latch has a connecting wire there is still the difficulty to control the latch in a precise way to be moved into or out of rotation preventing engagement as the latch is just loosely guided in a track between two positions. This problem could maybe be solved by using two connecting wires, but such a design would be most inconvenient as it required two wires in addition to the wire for the current transfer to the lamp.

### The Purpose and Most Essential Features of the Invention

The purpose of the present invention is to provide a control gear for a dynamo connected to a hub, particularly a wheel hub and of a type described hereabove, which control gear maintains the above stated advantages at the same time as the drawbacks of the earlier designs are eliminated and where the operation has been simplified and more reliable and this has been obtained by incorporating the features defined in claim 1.

### Description of the Drawings

The invention will hereinafter be further described with reference to an embodiment shown in the accompanying drawing.

Fig. 1 shows in a partly sectional view a hub generator having a control gear according to the invention.

Fig. 2 is a corresponding view of a portion of the armature of the generator, and

Fig. 3 shows a part of the control gear.

### Description of the Embodiment

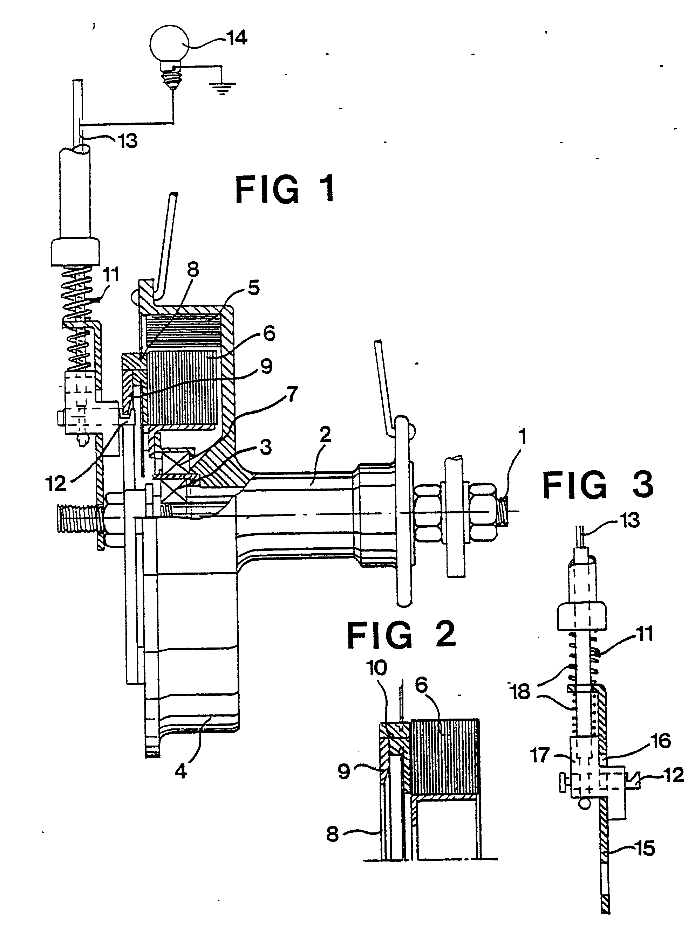

Figure 1 shows in a partly sectional view a bicycle hub 2 arranged on a wheel shaft 1, and which is supported on the shaft in two rolling bearings, preferably deep groove ball bearings, one of which is shown at 3, whereas the other is situated at the opposite axial end of the hub. The bicycle hub 2 is thus designed as a bearing housing, but it furthermore has a portion 4 arranged at one of the axial ends which portion has a bigger diameter, and this portion acts as a generator housing and carries on its internal envelope surface magnets 5 in annular form, which constitute a dynamo stator, which rotates with the hub. The armature 6 of the dynamo is arranged radially outside the hub bearing 3 shown in the figure and it is rotatably supported in a rolling bearing 7, preferably a deep groove ball bearing, whereby the armature likewise can take part in the rotational movement of the hub, without thereby causing any appreciable braking effect as the armature is well supported.

The armature 6 is connected to a shaped current collector 8 in form of a ring fixed to one end surface of the armature and having a radially directed outer flange 9.

In Figure 2 is separately shown an armature 6 and a current collector 8, and as can be seen herefrom the current generated is transferred to the current collector via a wire 10. Due to the particular design of the current collector with its outer radial flange 9 a space situated inside the current collector is created in which space a contact pin 12, connected to a control gear 11, is intended to engage. The current is then led from the contact pin via a conductor which also acts as a connecting wire 13 to the current consumer 14.

Figure 3 shows the control apparatus 11, which incorporates a connecting arm 15 by which means the device is fitted to the wheel shaft (see Fig. 1). The connecting arm is provided with an opening 16 in which a slider 17 is movably arranged. The slider 17 is connected to the connecting wire 13 which also acts as a current conductor, and the slider carries also said contact pin 12, which is arranged to extend from the slider perpendicularly to its track of movement in the opening 16 of the connecting arm. The connecting wire 13 is biased by means of a spring arrangement 18 against a position where the contact pin 12 is at some distance from engagement with the flange 9 of the current collector.

By means of a simple, not shown operating member, which is preferably arranged, on the bicycle handlebar it is possible to stretch the connecting wire 13, whereby the contact pin 12 will be moved against the action of the springs 18, to engagement with the current collector flange 9, whereby at the same time the armature 6 will be arrested, thus that it does not rotate with the magnets 5. Hereby the dynamo will generate current, which via the current collector 8, the contact pin 12 and the connecting wire 13 is transferred to the bicycle lamp 14 or to any other suitable current consumer. When the operating device on the handlebar is switched to the off-position the connecting wire 13 will be slackened and by means of the springs 18 the slider 17 will again be moved to its initial position, whereby the contact pin 12 moves radially in a direction from the current transferring and braking engagement with the current collector and the armature 6, which last mentioned thereby all again will begin to rotate with the hub, whereby the current generation ceases.

By means of this invention a control apparatus has thus been created, by which the operation can be brought about in a very simple and, on application as a bicycle generator, accident preventing manner. This is achieved by using a connecting wire as a current transferring member means so that the requirement of separate coupling and conductor members is eliminated.

## Claim

A control apparatus for a dynamo connected to a hub (2) particularly a wheel hub and which dynamo is of the type incorporating stator (5) and armature (6), rotating with the hub (2) and being arranged radially relative to each other, a locking device (12) arranged for being movable to a poosition in which it prevents one of stator and armature from being rotated, a current collector (8) fixed to one of said stator (5) and armature (6) and arranged to lead off current generated during arresting of stator (5) or armature (6), a connecting wire (13) having one end fixed within easy reach of the rider and the other end being attached to said locking device (12), which is movable during actuation of said connecting wire to current transmitting and rotation locking engagement with said current collector (8), characterized therein, that the connecting wire (13) is made from an electrically conductive material and acts as a current conductor, which via the current collector (8) and the locking device (12) is fed with current generated at the arresting of stator or armature, and that the locking device (12) is formed as a contact pin, which is radially movable and by means of spring members (18) is biased against a position releasing said current collector (8).

## Patentanspruch

Betätigungsvorrichtung für einen mit einer Nabe (2), insbesondere einer Radnabe, verbundenen Dynamo jener Art, welche einen Stator (5) und einen Anker (6), die mit der Nabe (2) drehen und in bezug aufeinander radial angeordnet sind, eine Blockiereinrichtung (12), die in eine Stellung bewegbar ist, in der sie die Drehung des genannten Stators oder Ankers unterbindet, einen an dem Stator (5) oder Anker (6) befestigten Stromabnehmer (8) zur Ableitung des bei angehaltenem Stator (5) oder Anker (6) erzeugten Stromes und einen Verbindungsdraht (13) enthält, dessen eines Ende in naher Reichweite des Fahrers befestigt und dessen anderes Ende an der genannten Blockiereinrichtung (12) festgelegt ist, die bei Betätigung des genannten Verbindungsdrahtes in stromübertragenden und rotationshemmenden Eingriff mit dem genannten Stromabnehmer (8) bewegbar ist, dadurch gekennzeichnet, daß der Verbindungsdraht (13) aus einem elektrisch leitenden Material hergestellt ist und als Stromleiter wirkt, der über den Stromabnehmer (8) und die Blockiereinrichtung (12) mit bei angehaltenem Stator oder Anker erzeugtem Strom gespeist wird, und daß die Blockiereinrichtung (12) als ein Kontaktstift ausgebildet ist, der radial beweglich und mittels Federelementen (18) in eine den genannten Stromabnehmer (8) freigebende Stellung beaufschlagt ist.

## Revendication

Un appareil de commande pour une dynamo reliée à un moyeu (2) particulièrement un moyeu de roue, laquelle dynamo est du type comportant un stator (5) et une armature (6) tournant avec le moyeu (2) et étant agencés radialement l'un par rapport à l'autre, un dispositif de verrouillage (12) agencé de façon à pouvoir être déplacé d'une position dans laquelle il empêche l'un du stator et de l'armature d'être entraîné en rotation, un collecteur de courant (8) fixé à l'un desdit stator (5) et armature (6) et agencé pour conduire le courant généré pendant l'arrêt du stator (5) ou d'armature (6), un fil collecteur (13) présentant une extrémité fixée de façon à être facilement accessible au cycliste et l'autre extrémité étant attachée au dit dispositif de verrouillage (12), qui est mobile pendant le fonctionnement dudit fil collecteur en transmission de courant et en engagement de verrouillage en rotation avec ledit collecteur de courant (8), caractérisé en ce que le fil collecteur (13) est fabriqué en un matériau électriquement conducteur et agit comme conducteur de courant, qui par l'intermédiaire du collecteur de courant (8) et du dispositif de verrouillage (12) est alimenté avec du courant produit à l'arrêt du stator ou de l'armature, et que le dispositif de verrouillage (12) est conçu en forme de goupille de contact qui est susceptible de se déplacer radialement et par l'intermédiaire d'éléments élastiques (18) est sollicité à l'encontre d'une position libérant ledit collecteur de courant (8).

# FIG 1

# FIG 3

# FIG 2